# FASCICULE DE BREVET EUROPEEN

(11) **EP 2 375 031 B1**
(45) Date de publication et mention de la délivrance du brevet: **30.10.2019**
(21) Numéro de dépôt: 11160874.1
(22) Date de dépôt: 01.04.2011
(51) Int. Cl.: F02K 3/06

(54) **Procédé et dispositif de distribution électrique d'un système d'allumage de moteur d'aéronef**
Ein elektronisches Verteilersystem für die Zündung eines Flugzeugmotors und zugehöriges Verfahren
An electrical distribution system for the ignition system of an aircfraft engine and corresponding method

(30) Priorité: 06.04.2010 FR 1052594
(43) Date de publication de la demande: 12.10.2011
(73) Titulaire: Airbus Operations, 31060 Toulouse (FR)
(72) Inventeur: Feau, Julien, 31000 Toulouse (FR); Rivot, Jean Luc, 31880 La Salvetat Saint-Gilles (FR); Clavel, Thierry, 82000 Montauban (FR)
(74) Mandataire: Santarelli

(56) Documents cités:
- EP-A2- 1 820 950
- EP-A2- 1 820 950
- WO-A1-99/63212
- US-A- 5 523 691
- US-A- 5 523 691

## Description

La présente invention concerne un procédé et un dispositif de distribution électrique d'un système d'allumage de moteur d'aéronef. Elle s'applique au système de contrôle de propulsion d'un aéronef.

Il est connu que, selon les réglementations applicables, un système de contrôle de propulsion d'un aéronef doit avoir un système pour redémarrer un moteur :
- basé sur deux allumeurs disposant de deux alimentations électriques séparées et
- alimenté par l'alimentation électrique d'urgence de l'aéronef (« EMER »).

Un tel système d'allumage est par exemple connu de EP1820950.

Pour un aéronef ayant deux moteurs, ces contraintes impliquent les conséquences suivantes sur la liste d'équipement minimum des allumeurs :
- l'allumeur connecté à l'alimentation électrique normale (« NORM ») est « GO » ce qui signifie que l'aéronef peut être autorisé à décoller sans cet équipement,
- dans des conditions non-ETOPS, l'allumeur connecté à l'alimentation d'urgence est « GO » sur un moteur seulement, sauf si l'alimentation EMER peut être fournie à son back-up, c'est-à-dire l'autre allumeur (ainsi, un allumeur connecté sur l'alimentation EMER peut être GO à condition que l'autre allumeur soit aussi sur l'alimentation EMER),
- en conditions ETOPS, l'allumeur connecté sur l'alimentation EMER est « NO-GO », ce qui signifie que l'aéronef ne peut être autorisé à décoller sans cet équipement, sauf si l'alimentation EMER peut être fournie à son back-up.

On rappelle ici que les conditions ETOPS démarrent lorsqu'une mission de diversion a une durée de plus de 60 minutes.

En conséquence, les allumeurs limitent différemment le droit de faire décoller l'avion en fonction de la barre d'alimentation électrique, c'est-à-dire la source d'alimentation électrique à laquelle ils sont connectés.

Les allumeurs connectés à l'alimentation électrique d'urgence imposent plus de contraintes sur le droit de l'avion à décoller que les allumeurs connectés à l'alimentation électrique normale.

Ainsi, si l'allumeur alimenté par l'alimentation d'urgence est défaillant simultanément à l'alimentation normale, aucun allumeur ne peut rallumer le moteur en cas d'extinction.

La présente invention vise à remédier à ces inconvénients.

A cet effet, selon un premier aspect, la présente invention vise un dispositif de distribution électrique d'un système d'allumage d'un moteur d'un aéronef comportant une alimentation électrique principale et une alimentation électrique secondaire, un allumeur principal et un allumeur secondaire, caractérisé en ce qu'il comporte un système d'alimentation électrique adapté à alimenter au moins l'un des dits allumeurs alternativement par l'une ou l'autre des dites alimentations électriques.

Grâce à ces dispositions, l'un des allumeurs, mis en œuvre avec l'une des alimentations en conditions normales de fonctionnement peut aussi être utilisé lorsque cette alimentation électrique est défectueuse. Par exemple, l'allumeur principal peut être alimenté, en fonctionnement normal par l'alimentation électrique principale et, en cas de défaut de l'alimentation électrique principale, par l'alimentation électrique secondaire.

Selon des caractéristiques particulières, au moins un dit système d'alimentation électrique comporte un commutateur adapté à alimenter l'allumeur auquel il est relié, par l'une ou l'autre des alimentations électriques.

Selon des caractéristiques particulières, ledit commutateur comporte un relais alimenté par l'une des alimentations électriques pour que, en cas de défaut de cette alimentation électrique, l'allumeur auquel est relié le commutateur soit relié à l'autre alimentation électrique.

Selon des caractéristiques particulières, le dispositif objet de la présente invention, tel que succinctement exposé ci-dessus comporte un moyen de commutation dudit commutateur pour simuler un défaut d'alimentation électrique et un moyen de détection si l'allumeur auquel est relié le commutateur est relié à ladite autre alimentation électrique.

Grâce à ces dispositions, on vérifie que le commutateur est en état de fonctionnement et, si non, on déclenche sa maintenance.

Selon des caractéristiques particulières, au moins un système d'alimentation comporte un moyen de surveillance, à distance, de l'état dudit commutateur.

On évite, ainsi, des limitations dans le droit de l'avion à décoller dues à une panne de commutateur ou de relais. Cette architecture optimise aussi les caractéristiques existantes, par exemple en utilisant une fonction d'interface de moteur, tout en limitant les modifications à réaliser à une architecture connue.

Il est anticipé que l'amélioration du droit de l'avion à décoller est que dans des conditions ETOPS (acronyme de « Extended range Twin engine aircraft OperationS », pour opérations d'aéronef à deux moteurs à rayon d'action étendu), chaque allumeur secondaire peut être défaillant tout en maintenant l'allumeur principal opérationnel car susceptible d'être alimenté par l'alimentation de secours.

Selon un deuxième aspect, la présente invention vise un aéronef comportant un dispositif objet de la présente invention, tel que succinctement exposé ci-dessus.

Selon un troisième aspect, la présente invention vise un procédé de distribution électrique d'un système d'allumage d'un moteur d'un aéronef comportant une alimentation électrique principale et une alimentation électrique secondaire, un allumeur principal et un allumeur secondaire, caractérisé en ce qu'il comporte une étape d'alimentation d'un allumeur par une alimentation, une étape de détection de défaillance de ladite alimentation et en cas de défaillance de ladite alimentation, une étape d'alimentation du même allumeur par l'autre des alimentations.

Selon des caractéristiques particulières, l'étape d'alimentation de l'allumeur par l'autre des alimentations comporte une étape de commutation d'un commutateur adapté à alimenter l'allumeur auquel il est relié, par l'une ou l'autre des alimentations électriques.

Selon des caractéristiques particulières, le procédé objet de la présente invention comporte une étape de déclenchement de test en fonction d'un critère prédéterminé, une étape de commutation dudit commutateur, une étape de détection d'alimentation dudit allumeur et, en l'absence d'alimentation dudit allumeur, une étape d'émission d'un message de maintenance.

Selon des caractéristiques particulières, le critère prédéterminé est un nombre de vols ou un nombre d'heures de vols effectués depuis la dernière étape de commutation d'alimentation.

Les avantages, buts et caractéristiques de cet aéronef et de ce procédé étant similaires à ceux du dispositif objet de la présente invention, tel que succinctement exposé ci-dessus, ils ne sont pas rappelés ici.

D'autres avantages, buts et caractéristiques de la présente invention ressortiront de la description qui va suivre faite, dans un but explicatif et nullement limitatif, en regard des dessins annexés, dans lesquels :
- la figure 1 représente, schématiquement, une architecture connue d'alimentation d'allumeurs dans un aéronef,
- la figure 2 représente, schématiquement, un mode de réalisation particulier du dispositif objet de la présente invention, dans un premier état,
- la figure 3 représente, schématiquement, le dispositif objet de la présente invention illustré en figure 2, dans un deuxième état,
- la figure 4 représente, schématiquement, une implantation dans un aéronef, d'un dispositif objet de la présente invention et
- les figures 5 et 6 représentent, sous forme de logigrammes, des étapes mises en œuvre dans un mode de réalisation du procédé objet de la présente invention.

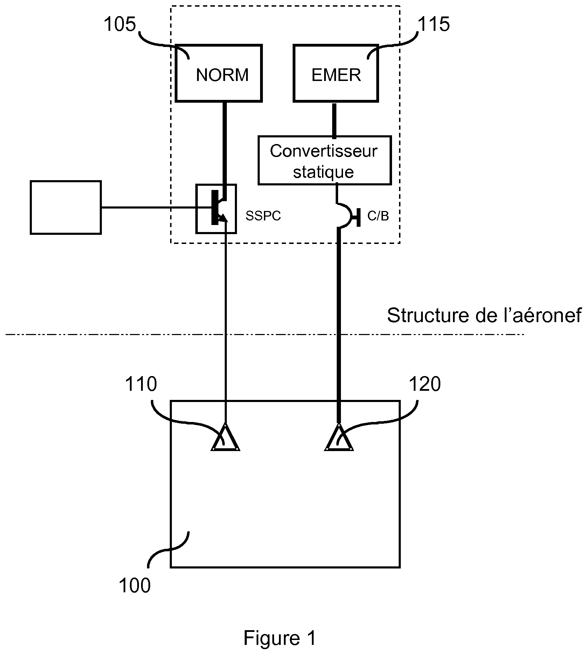

La figure 1 illustre une architecture d'alimentation d'allumeurs de type connue. On y observe que, pour chaque moteur 100, une alimentation normale ou principale 105 est reliée à un allumeur principal 110 et une alimentation d'urgence ou secondaire 115 est reliée à un allumeur secondaire 120. Basé sur cette architecture, les capacités de distribution des allumeurs sont :
- l'allumeur principal 110 est « GO »,
- en conditions non-ETOPS, l'allumeur secondaire 120 est « GO » sur un seul moteur et
- en conditions ETOPS, l'allumeur secondaire 120 est « NO-GO ».

Les défauts de cette architecture, de type connu, ont été rappelés ci-dessus.

Conformément à la présente invention, on met en œuvre une autre architecture d'alimentation d'allumeurs.

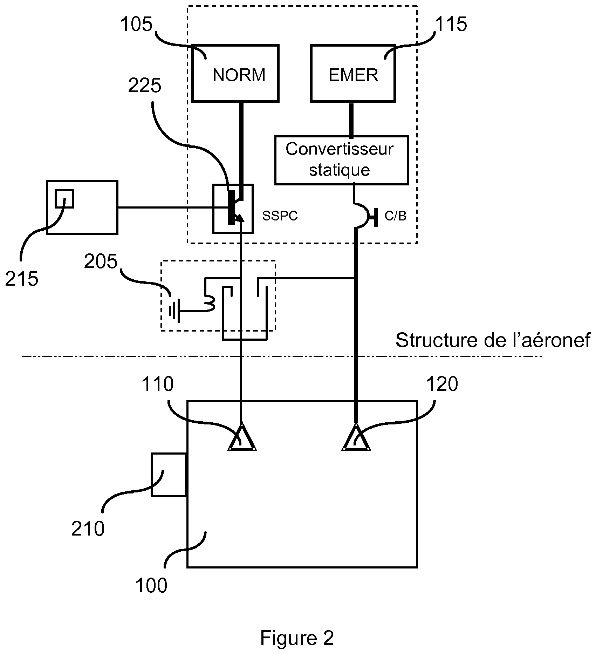

Dans le mode de réalisation particulier illustré en figure 2, on met en œuvre une installation de relais spécifique qui permet de commuter automatiquement l'alimentation électrique d'urgence à chaque allumeur du même moteur en cas de panne de l'alimentation électrique normale.

De plus, cette architecture permet de surveiller l'état des relais et, ainsi, d'éviter des limitations de distribution dues à une panne de relais. Cette architecture optimise aussi les caractéristiques existantes, par exemple en utilisant une fonction d'interface de moteur, tout en limitant les modifications à réaliser.

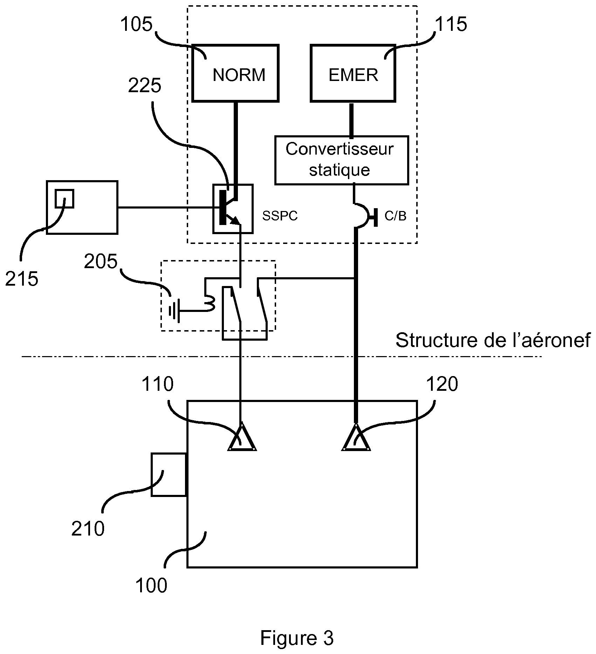

Comme illustré en figures 2 et 3, dans un mode de réalisation de la présente invention, une installation de relais 205 est ajoutée à l'architecture pour commuter l'alimentation électrique d'urgence secondaire 115 sur l'allumeur principal 110.

Avec cette architecture, si chaque système est opérationnel, le relais 205 est dans l'état 1 illustré en figure 2 et l'allumeur secondaire 120 est alimenté par l'alimentation EMER secondaire 115 et l'allumeur principal 110 est alimenté par l'alimentation normale principale 105.

En cas de panne de la barre de bus NORM, ici la source d'alimentation électrique 105, le relais 205 commute automatiquement dans l'état 2 illustré en figure 3 et fournit l'alimentation électrique EMER secondaire 115 à l'allumeur principal 110.

En conséquence, si l'allumeur secondaire 120 de chaque moteur 100 est inopérant et qu'une extinction survient sur chaque moteur 100, ce qui mène à une panne de la barre de bus NORM, chaque allumeur principal 110 est alimenté par l'alimentation électrique d'urgence EMER secondaire 115, ce qui permet à chaque moteur 100 de se rallumer.

Préférentiellement, on met en œuvre, en outre, un contrôle de chaque relais 205 à partir d'une fonction d'interface de moteur (ou EIF pour « Engine Interface Function ») 210 et, ainsi, on surveille le fonctionnement du relais 205 pour éviter toute limitation de distribution due à une panne de ce relais 205.

La fonction d'interface de moteur EIF 210 et le EEC (acronyme de Electronic Engine Control pour contrôle de moteur électronique) 215 effectuent un test automatique régulièrement après un nombre prédéterminé de vols ou d'heures de vol. Ce test peut consister à ouvrir un SSPC (acronyme de « Solid State Power Control » pour contrôle de puissance par matériel, ou coupe-circuit numérique) 225 et à attendre que l'EEC 215 envoie un statut représentant que l'allumeur principal 110 est alimenté ou non. Si l'EEC 215 détecte que l'allumeur principal 110 est alimenté, cela signifie que le relais 205 est opérationnel. Au contraire, si l'allumeur principal 110 n'est pas alimenté, cela signifie que le relais 205 n'est pas opérationnel. Dans ce cas, un message de maintenance est transmis par la fonction d'interface de moteur EIF 210.

Cette surveillance permet d'éviter de détecter une panne de relais 205 seulement lors d'une panne de l'allumeur secondaire 120.

Grâce à la mise en œuvre de la présente invention, une bonne robustesse aux pannes est obtenue (jusqu'à un allumeur inopérant par moteur) : en cas de panne de barre d'urgence EMER, un moteur peut encore être rallumé en cas d'extinction. De plus, il n'est pas nécessaire de rajouter de ligne électrique câblée, et les conditions ETOPS ne constituent pas une restriction pour déterminer le droit de faire décoller l'avion. On note que le surpoids dû à la mise en œuvre de la présente invention peut être de moins de cent grammes.

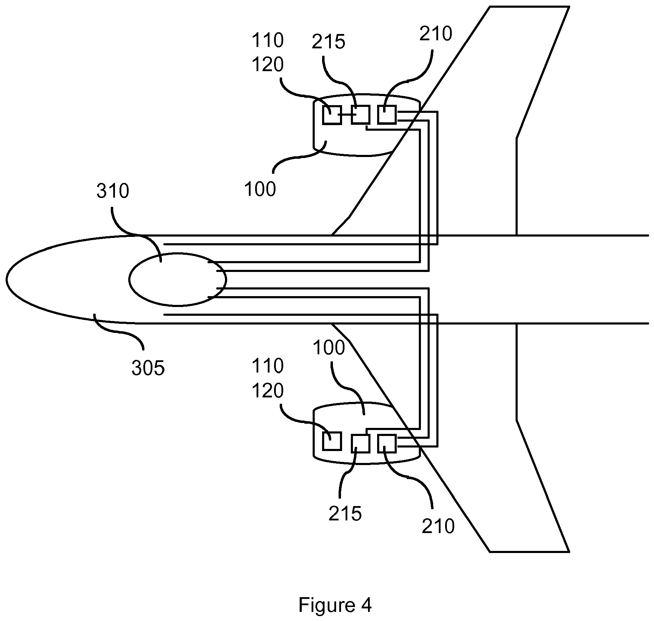

On observe, en figure 4, que dans un aéronef bimoteur 305, la présente invention peut être implantée avec, relié aux allumeurs 110 et 120, un EEC 215. Par ailleurs l'EEC 215 communique avec l'EIF 210 via un réseau AFDX (acronyme de « Avionics full duplex » pour avionique duplex intégral) 310 pour effectuer le test automatique régulier décrit ci-dessus.

Les allumeurs 110 et 120 sont connectés à l'EEC 215 sur le moteur, lui-même connecté à l'EIF 210 via l'AFDX 310.

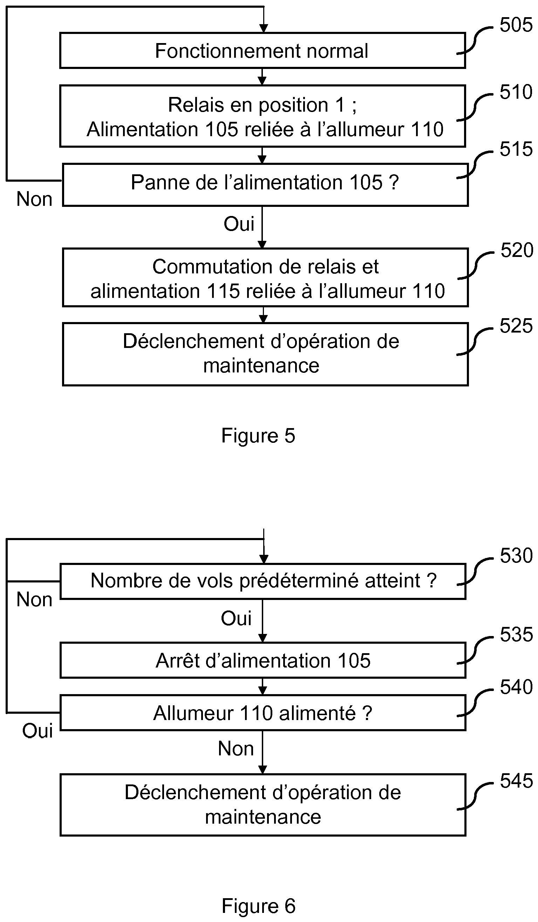

On observe, en figure 5, les étapes de fonctionnement du relais 205. Au cours du fonctionnement normal de l'aéronef, étape 505, le relais 205 est dans la position illustrée en figure 2, l'alimentation électrique primaire 105 alimentant l'allumeur principal 110 et l'alimentation électrique secondaire 115 alimente l'allumeur secondaire 120, étape 510.

Au cours d'une étape 515, on détermine si l'alimentation électrique primaire 105 est défectueuse. Si non, on retourne à l'étape 505. Si l'alimentation électrique primaire 105 est défectueuse, au cours d'une étape 520, le relais 205 passe dans la position illustrée en figure 3 et l'alimentation électrique secondaire 115 délivre une tension aux deux allumeurs 110 et 120. Puis on passe à une étape 525, au cours de laquelle on émet un message pour signaler la nécessité de procéder à une opération de maintenance de l'alimentation défectueuse. On observe, en figure 6, les étapes de test en fonctionnement normal. Après chaque vol, au cours d'une étape 530, on détermine si un test de relais doit être déclenché, en fonction d'un critère prédéterminé. Dans un premier mode de réalisation, le critère prédéterminé concerne un nombre de vols effectués depuis le dernier test. Par exemple, à chaque vol, on incrémente la valeur d'un compteur de vols et, au cours de l'étape 530, on compare la valeur de ce compteur de vols avec le nombre prédéterminé. Si le résultat est négatif, on retourne au fonctionnement normal pour le vol suivant.

Si le nombre prédéterminé de vols a été effectué, au cours d'une étape 535, on arrête l'alimentation électrique principale 105 par l'EIF 210. Puis, au cours d'une étape 540, on détermine si l'allumeur principal 110 est sous tension. Si oui, on retourne au fonctionnement normal pour le prochain vol en réinitialisant à « 0 » la valeur du compteur de vols effectués. Si l'allumeur principal 110 n'est pas sous tension, au cours d'une étape 545, on déclenche l'émission d'un message signalant la nécessité de procéder à une opération de maintenance du relais 205.

En variante, on utilise un nombre d'heures de vol prédéterminé comme critère prédéterminé de déclenchement de test de relais, à la place du nombre de vols prédéterminé.

## Revendications

1. Dispositif de distribution électrique d'un système d'allumage d'un moteur (100) d'un aéronef (305) comportant une alimentation électrique principale (105) et une alimentation électrique secondaire (115), un allumeur principal (110) et un allumeur secondaire (120) comportant un système d'alimentation électrique (205, 225) adapté à alimenter au moins l'un desdits allumeurs alternativement par l'une ou l'autre desdites alimentations électriques, ledit système d'alimentation électrique comprenant un commutateur (205) relié à au moins un desdits allumeurs principal et secondaire (110, 120) et adapté à l'alimenter alternativement par l'une ou l'autre des deux alimentations électriques,
**caractérisé en ce qu'**il comporte un moyen de coupure d'au moins l'une des alimentations principale et secondaire pour simuler un défaut d'alimentation électrique et un moyen de contrôle d'alimentation configuré pour détecter si l'allumeur relié au commutateur est alimenté ou non.

2. Dispositif selon la revendication 1, dans lequel ledit commutateur (205, 225) comporte un relais (205) alimenté par l'une des alimentations électriques (105) pour que, en cas de défaut de cette alimentation électrique, l'allumeur (110) auquel est relié le commutateur soit relié à l'autre alimentation électrique (115).

3. Dispositif selon l'une quelconque des revendications 1 à 2, dans lequel le moyen de coupure comprend un coupe-circuit numérique (225).

4. Dispositif selon l'une quelconque des revendications 1 à 3, dans lequel le moyen de contrôle d'alimentation comprend un contrôleur de moteur électronique (215) et une fonction d'interface de moteur (210).

5. Aéronef (305) **caractérisé en ce qu'**il comporte un dispositif selon l'une quelconque des revendications 1 à 4.

6. Procédé de distribution électrique d'un système d'allumage d'un moteur d'un aéronef (305), ce système d'allumage comportant une alimentation électrique principale (105) et une alimentation électrique secondaire (115), un allumeur principal (110) et un allumeur secondaire (120), au moins l'un des allumeurs étant relié à un commutateur (205) permettant d'alimenter cet allumeur alternativement par l'une ou l'autre des alimentations principale et secondaire,
le procédé de distribution électrique comprenant une étape (510) d'alimentation de l'allumeur (110) par l'une des alimentations principale et secondaire (105), une étape (515) de détection de défaillance de ladite alimentation et, en cas de défaillance de ladite alimentation, une étape (520) d'alimentation du même allumeur par l'autre des alimentations (115) par basculement (520) du commutateur (205),
**caractérisé en ce qu'**il comporte une étape (530) de déclenchement de test en fonction d'un critère prédéterminé, une étape (535) de coupure de l'une des alimentations pour simuler un défaut d'alimentation électrique, une étape (540) de contrôle d'alimentation de l'allumeur relié au commutateur et, en l'absence d'alimentation dudit allumeur, une étape (545) d'émission d'un message de maintenance.

7. Procédé selon la revendication 6, dans lequel le critère prédéterminé est un nombre de vols ou un nombre d'heures de vols effectués depuis la dernière étape (535) de déclenchement de test (530)

## Patentansprüche

1. Vorrichtung zur Stromverteilung eines eine Hauptstromversorgung (105) und eine sekundäre Stromversorgung (115), eine Hauptzündvorrichtung (110) und eine sekundäre Zündvorrichtung (120) aufweisenden Zündsystems eines Motors (100) eines Luftfahrzeugs (305), welche ein Stromversorgungssystem (205, 225) aufweist, das dafür ausgelegt ist, wenigstens eine der Zündvorrichtungen alternativ durch die eine oder die andere der Stromversorgungen zu versorgen, wobei das Stromversorgungssystem einen Umschalter (205) umfasst, der mit wenigstens einer von der Hauptzündvorrichtung und der sekundären Zündvorrichtung (110, 120) verbunden ist und dafür ausgelegt ist, sie alternativ durch die eine oder die andere der zwei Stromversorgungen zu versorgen,
**dadurch gekennzeichnet, dass** sie ein Mittel zum Abschalten wenigstens einer von der Hauptstromversorgung und der sekundären Stromversorgung, um einen Ausfall der Stromversorgung zu simulieren, und ein Mittel zur Kontrolle der Versorgung, das dafür ausgebildet ist zu erkennen, ob die mit dem Umschalter verbundene Zündvorrichtung versorgt wird oder nicht, aufweist.

2. Vorrichtung nach Anspruch 1, wobei der Umschalter (205, 225) ein Relais (205) aufweist, das durch eine der Stromversorgungen (105) versorgt wird, damit im Falle eines Ausfalls dieser Stromversorgung die Zündvorrichtung (110), mit welcher der Umschalter verbunden ist, mit der anderen Stromversorgung (115) verbunden wird.

3. Vorrichtung nach einem der Ansprüche 1 bis 2, wobei das Mittel zum Abschalten einen digitalen Leistungsschalter (225) umfasst.

4. Vorrichtung nach einem der Ansprüche 1 bis 3, wobei das Mittel zur Kontrolle der Versorgung eine elektronische Motorsteuerung (215) und eine Motorschnittstellenfunktion (210) umfasst.

5. Luftfahrzeug (305), **dadurch gekennzeichnet, dass** es eine Vorrichtung nach einem der Ansprüche 1 bis 4 aufweist.

6. Verfahren zur Stromverteilung eines Zündsystems eines Motors eines Luftfahrzeugs (305), wobei dieses Zündsystem eine Hauptstromversorgung (105) und eine sekundäre Stromversorgung (115), eine Hauptzündvorrichtung (110) und eine sekundäre Zündvorrichtung (120) aufweist, wobei wenigstens eine der Zündvorrichtungen mit einem Umschalter (205) verbunden ist, der es ermöglicht, diese Zündvorrichtung alternativ durch die eine oder die andere von der Hauptstromversorgung und der sekundären Stromversorgung zu versorgen,
wobei das Verfahren zur Stromverteilung einen Schritt (510) der Versorgung der Zündvorrichtung (110) durch eine von der Hauptstromversorgung und der sekundären Stromversorgung (105), einen Schritt (515) der Erkennung eines Ausfalls dieser Stromversorgung und, im Falle eines Ausfalls dieser Stromversorgung, einen Schritt (520) der Versorgung derselben Zündvorrichtung durch die andere der Stromversorgungen (115) durch Umschalten (520) des Umschalters (205) umfasst, **dadurch gekennzeichnet, dass** es einen Schritt (530) der Auslösung eines Tests in Abhängigkeit von einem vorbestimmten Kriterium, einen Schritt (535) der Abschaltung einer der Stromversorgungen, um einen Ausfall der Stromversorgung zu simulieren, und einen Schritt (540) der Kontrolle der Versorgung der mit dem Umschalter verbundenen Zündvorrichtung und, bei Nichtvorhandensein einer Versorgung dieser Zündvorrichtung, einen Schritt (545) der Ausgabe einer Wartungsmeldung umfasst.

7. Verfahren nach Anspruch 6, wobei das vorbestimmte Kriterium eine Anzahl von Flügen oder eine Anzahl von Flugstunden ist, die seit dem letzten Schritt (535) der Auslösung eines Tests (530) absolviert wurden.

## Claims

1. Electrical distribution device for an ignition system of an engine (100) of an aircraft (305) comprising a main electrical power supply (105) and a secondary electrical power supply (115), a main ignitor (110) and a secondary ignitor (120) comprising an electrical power supply system (205, 225) suitable for powering at least one of said ignitors alternately by one or other of said electrical power supplies, said electrical power supply system comprising a switch (205) linked to at least one of said main and secondary ignitors (110, 120) and suitable for alternately powering it by one or other of the two electrical power supplies,
**characterized in that** it comprises a means for breaking at least one of the main and secondary power supplies to simulate an electrical power supply failure and a power supply control means configured to detect whether the ignitor linked to the switch is powered or not.

2. Device according to Claim 1, wherein said switch (205, 225) comprises a relay (205) powered by one of the electrical power supplies(105) so that, in case of failure of this electrical power supply, the ignitor (110) to which the switch is linked is linked to the other electrical power supply (115).

3. Device according to either one of Claims 1 and 2, in which the breaking means comprises a digital circuit breaker (225).

4. Device according to any one of Claims 1 to 3, wherein the power supply control means comprises an electronic engine controller (215) and an engine interface function (210).

5. Aircraft (305), **characterized in that** it comprises a device according to any one of Claims 1 to 4.

6. Electrical distribution method for an ignition system of an engine of an aircraft (305), this ignition system comprising a main electrical power supply (105) and a secondary electrical power supply (115), a main ignitor (110) and a secondary ignitor (120), at least one of the ignitors being linked to a switch (205) making it possible to power this ignitor alternately by one or other of the main and secondary power supplies,
the electrical distribution method comprising a step (510) of powering of the ignitor (110) by one of the main and secondary power supplies (105), a step (515) of detection of failure of said power supply and, in case of failure of said power supply, a step (520) of powering of the same ignitor by the other of the power supplies (115) by switchover (520) of the switch (205),
**characterized in that** it comprises a step (530) of triggering of a test based on a predetermined criterion, a step (535) of breaking of one of the power supplies to simulate an electrical power supply by failure, a step (540) of controlling of the power supply of the ignitor linked to the switch and, in the absence of power supply to said ignitor, a step (545) of transmission of a maintenance message.

7. Method according to Claim 6, wherein the predetermined criterion is a number of flights or a number of flight hours performed since the last step (535) of triggering of a test (530).
